# EUROPEAN PATENT APPLICATION

(11) **EP 4 372 241 A1**
(43) Date of publication of application: **22.05.2024**
(21) Application number: 22842004.8
(22) Date of filing: 05.07.2022
(51) Int. Cl.: F16C 19/18, F16C 33/58, B60B 35/02

(54) **VEHICLE WHEEL BEARING DEVICE**

(30) Priority: 12.07.2021 JP 2021115067
(71) Applicant: NTN Corporation, Osaka-shi, Osaka 550-0003 (JP)
(72) Inventor: FUKUSHIMA Shigeaki, Iwata-shi, Shizuoka 438-8510 (JP); TORII Akira, Iwata-shi, Shizuoka 438-8510 (JP)
(74) Representative: Grünecker Patent- und Rechtsanwälte PartG mbB
(86) International application number: PCT/JP2022/026728
(87) International publication number: WO 2023/286660

(57) **Abstract**

Provided is a vehicle wheel bearing device that suppresses shaking of a vehicle wheel mounting flange, which is caused by bolt tightening, by defining dimensional relationships of the various components of the vehicle wheel mounting flange. A vehicle wheel mounting flange (3b) of a vehicle wheel bearing device (1) includes: a plurality of screw holes (31) into which wheel bolts that fix a wheel and a brake rotor are screwed; and a rib (35) provided on an inner side circumferential edge of the screw holes (31). When A represents a nominal diameter of the screw hole (31), B represents a width direction dimension of the rib (35) in a cross-section that passes through the center of the screw hole (31) and that is tangent to the pitch circle of the screw hole (31), and C represents a thickness direction dimension of the vehicle wheel mounting flange (3b) that passes through the rib (35), B/A ≥ 1.7 and C/A ≥ 0.8 are satisfied.

## Description

### TECHNICAL FIELD

The present invention relates to a bearing device for a vehicle wheel.

### BACKGROUND ART

Conventionally, there is known a bearing device for a vehicle wheel in which a vehicle wheel mounting flange is integrally formed on an outer periphery of a hub ring, a plurality of bolt holes are provided in the vehicle wheel mounting flange, and hub bolts for mounting a brake rotor and a wheel are press-fitted into each bolt hole.

In such a bearing device for a vehicle wheel, when the hub bolt is press-fitted, a material plastically flows to cause undulation in the vehicle wheel mounting flange, which may increase deflection (shaking) of the vehicle wheel mounting flange. Deterioration in accuracy of deflection of the vehicle wheel mounting flange causes brake judder. As a countermeasure against this challenge, a configuration has been proposed in which, for example, a counterbore is provided around the bolt hole on a side surface of the brake rotor of the vehicle wheel mounting flange to absorb plastic flow (see Patent Literature 1).

Additionally, as a configuration that eliminates the influence of press-fitting hub bolts, a bearing device for a vehicle wheel has been proposed in which the vehicle wheel mounting flange has a plurality of screw holes, and a wheel bolt inserted from the outside is screwed into each screw hole to fix the brake rotor and wheel. In the configuration disclosed in Patient Literature 1 or in this configuration, a rib is provided especially around the bolt hole or screw hole, thereby ensuring the rigidity of the bearing in service and reducing the weight of the device.

### CITATIONS LIST

### PATENT LITERATURE

Patent Literature 1: JP-A 2007-203949 Gazette

### SUMMARY OF INVENTION

### TECHNICAL PROBLEMS

However, it has been difficult to improve accuracy of deflection of the vehicle wheel mounting flange only by ensuring rigidity at the time of use. Therefore, the inventors of the present invention have found through analysis and experiments that slight variations in the tightening force of the wheel bolt in each screw hole lead to variation in deformation around each screw hole, and that the variation in deformation around each screw hole generally causes deterioration in the accuracy of deflection of the vehicle wheel mounting flange.

The inventors of the present invention have found that it is necessary to define a dimensional relationship of each part of the vehicle wheel mounting flange in order not only to ensure the rigidity at the time of using the bearing device for a vehicle wheel but also to reduce the influence of the variation in fastening force of the wheel bolt.

An object of the present invention is to provide a bearing device for a vehicle wheel that suppresses deflection of a vehicle wheel mounting flange due to bolt fastening by defining a dimensional relationship of each part of the vehicle wheel mounting flange.

### SOLUTIONS TO PROBLEMS

A bearing device for a vehicle wheel of the present invention includes: an outer member having double-row outer raceway surfaces on an inner periphery; an inner member having double-row inner raceway surfaces, the inner raceway surfaces facing the double-row outer raceway surfaces; and double-row rolling elements rotatably accommodated between both raceway surfaces of the outer member and the inner member, wherein one of the outer member and the inner member has a vehicle wheel mounting flange, the vehicle wheel mounting flange includes a plurality of screw holes into which wheel bolts are screwed for fixing a wheel and a brake rotor, and ribs respectively provided on inner-side circumferential edges of the screw holes, and B/A ≥ 1.7 and C/A ≥ 0.8 are satisfied, when a nominal diameter of the screw hole is denoted by A, a width-direction dimension of the rib is denoted by B in a cross-section passing through the center of the screw hole and being a tangent to a pitch circle of the screw hole, and a thickness-direction dimension of the vehicle wheel mounting flange passing through the rib is denoted by C.

Moreover, a bearing device for a vehicle wheel according to the present invention includes: an outer member having double-row outer raceway surfaces on an inner periphery; an inner member having double-row inner raceway surfaces, the inner raceway surfaces facing the double-row outer raceway surfaces; and double-row rolling elements rotatably accommodated between both raceway surfaces of the outer member and the inner member, wherein one of the outer member and the inner member has a vehicle wheel mounting flange, the vehicle wheel mounting flange includes a plurality of screw holes into which bolts are screwed for fixing a brake rotor only, and ribs respectively provided on inner-side circumferential edges of the screw holes, and F/E ≥ 1.7 and G/E ≥ 0.8 are satisfied, when a nominal diameter of the screw hole is denoted by E, a width-direction dimension of the rib is denoted by F in a cross-section passing through the center of the screw hole and being a tangent to a pitch circle of the screw hole, and a thickness-direction dimension of the vehicle wheel mounting flange passing through the rib is denoted by G.

### ADVANTAGEOUS EFFECTS OF INVENTION

According to the present invention, in the bearing device for a vehicle wheel, the deformation of a peripheral portion of a screw hole of the vehicle wheel mounting flange due to the bolt fastening can be reduced by defining the dimensions of the rib around the screw hole, so that the deflection of vehicle wheel mounting flange can be suppressed.

### BRIEF DESCRIPTION OF DRAWINGS

FIG. 1 is a cross-sectional view of a bearing device for a vehicle wheel according to an embodiment.
FIG. 2 is a side view of a hub ring of FIG. 1 as viewed from an inner side.
FIG. 3 is a cross-sectional view taken along line X-X of FIG. 2.
FIG. 4 is a cross-sectional view taken along line Y-Y of FIG. 2.

### DESCRIPTION OF EMBODIMENT

### [Overall configuration of bearing device for vehicle wheel]

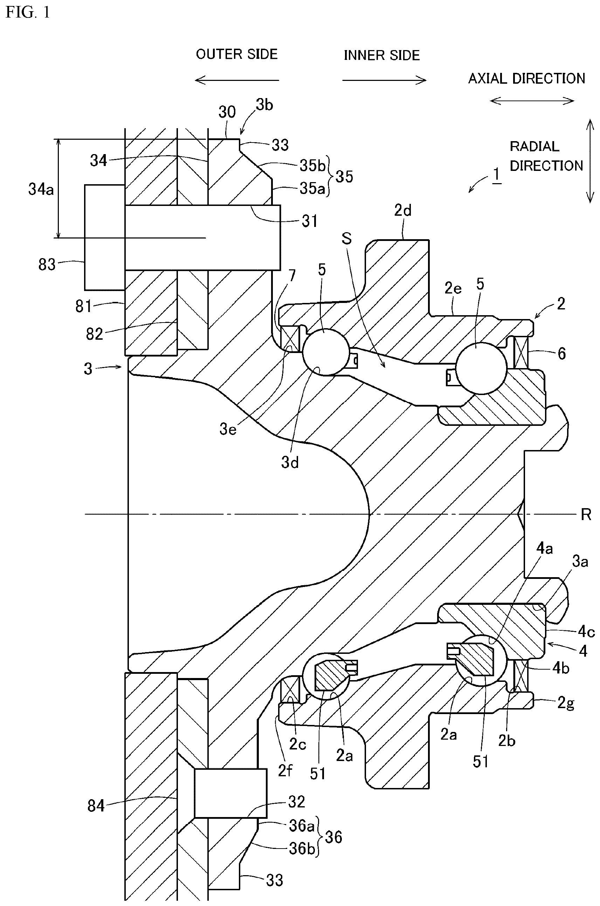

The overall configuration of a bearing device for a vehicle wheel 1 will be described with reference to FIG. 1. In the following description, an inner side represents a vehicle body side of the bearing device for a vehicle wheel 1 when attached to a vehicle body, and an outer side represents to a vehicle wheel side of the bearing device for a vehicle wheel 1 when attached to the vehicle body. An axial direction refers to a direction along a rotation axis R of the bearing device for a vehicle wheel 1. A radial direction refers to a direction perpendicular to the rotation axis R.

As illustrated in FIG. 1, the bearing device for a vehicle wheel 1 rotatably supports a vehicle wheel in a suspension system of a vehicle such as an automobile. The bearing device for a vehicle wheel 1 includes an outer ring 2 as an example of an outer member, a hub ring 3 and an inner ring 4 as examples of an inner member, rolling elements 5, an inner-side seal member 6, and an outer-side seal member 7.

The outer ring 2 supports the hub ring 3 and the inner ring 4. An inner-side fitting surface 2b to which the inner-side seal member 6 is fitted is provided on an inner circumferential surface of an inner-side end portion 2g of the outer ring 2. An outer-side fitting surface 2c to which the outer-side seal member 7 is fitted is provided on an inner circumferential surface of an outer-side end portion 2f of the outer ring 2. A vehicle body mounting flange 2d for mounting to a knuckle of the suspension device (not illustrated) is integrally provided on an outer circumferential surface 2e of the outer ring 2. Double-row outer raceway surfaces 2a and 2a are provided in a circumferential direction on the inner side and the outer side on an inner circumferential surface of the outer ring 2.

The hub ring 3 rotatably supports the vehicle wheel of the vehicle (not illustrated). A radially-reduced stepped portion 3a extending in the axial direction is provided at an inner-side end portion of an outer circumferential surface of the hub ring 3. A vehicle wheel mounting flange 3b for mounting the vehicle wheel is integrally provided at an outer-side end portion of the hub ring 3. The vehicle wheel mounting flange 3b is provided with a plurality of screw holes 31 into which wheel bolts 83 are screwed for fixing a wheel 81 of the vehicle wheel and a brake rotor 82, and a plurality of screw holes 32 into which bolts 84 are screwed for fixing the brake rotor 82 only. The outer circumferential surface of the hub ring 3 on the outer side is provided with an inner raceway surface 3d facing the outer raceway surface 2a on the outer side. That is, the inner raceway surface 3d is formed by the hub ring 3 on the outer side of the inner member. A sliding contact surface 3e with which the outer-side seal member 7 comes into sliding contact is provided on a base side of the vehicle wheel mounting flange 3b in the hub ring 3.

The inner ring 4 is press-fitted into the radially-reduced stepped portion 3a of the hub ring 3. The inner ring 4 applies a pre-load to the rolling elements 5. An outer circumferential surface of the inner ring 4 is provided with an inner raceway surface 4a facing the outer raceway surface 2a on the inner side. That is, the inner raceway surface 4a is formed by the inner ring 4 on the inner side of the inner member. A fitting surface 4b to which the inner-side seal member 6 is fitted is provided on an outer circumferential surface of an inner-side end portion 4c of the inner ring 4.

The rolling elements 5 are composed of balls. The rolling elements 5 on the inner side and the rolling elements 5 on the outer side are each held by a cage 51. The rolling element 5 on the inner side is rotatably sandwiched between the inner raceway surface 4a of the inner ring 4 and the outer raceway surface 2a of the outer ring 2 on the inner side. The rolling element 5 on the outer side is rotatably sandwiched between the inner raceway surface 3d of the hub ring 3 and the outer raceway surface 2a of the outer ring 2 on the outer side. That is, the rolling element 5 on the inner side and the rolling element 5 on the outer side are rotatably accommodated between raceway surfaces of the outer member and the inner member. As described above, the outer ring 2, the hub ring 3, the inner ring 4, and the double-row rolling elements 5 constitute double-row angular ball bearings in the bearing device for a vehicle wheel 1. The bearing device for a vehicle wheel 1 may constitute a plurality rows of tapered roller bearings instead of the double-row angular ball bearings.

The inner-side seal member 6 and the outer-side seal member 7 are seal members that are formed by the outer member and the inner member and close an opening end of an annular space S filled with a required amount of lubricating grease. The inner-side seal member 6 is attached to an inner-side opening end formed between the outer ring 2 and the inner ring 4 in the annular space S. Meanwhile, the outer-side seal member 7 is attached to an outer-side opening end formed between the outer ring 2 and the hub ring 3 in the annular space S.

### [Configuration of vehicle wheel mounting flange]

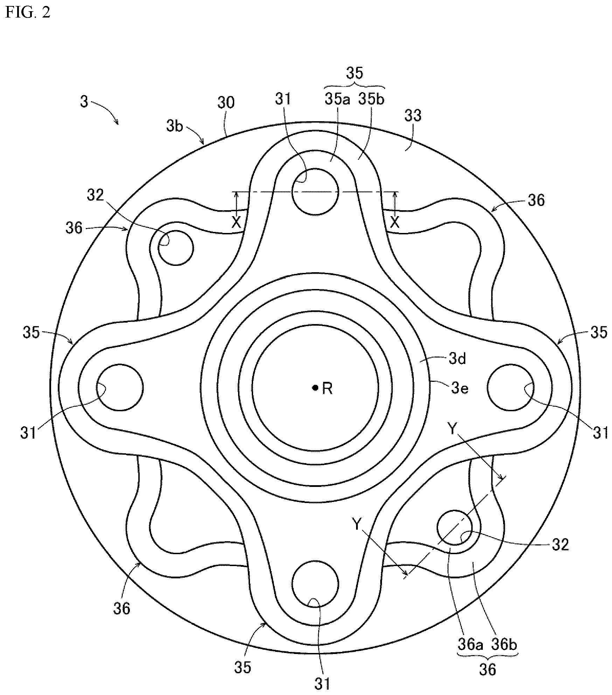

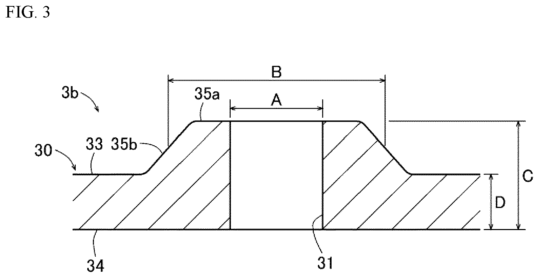

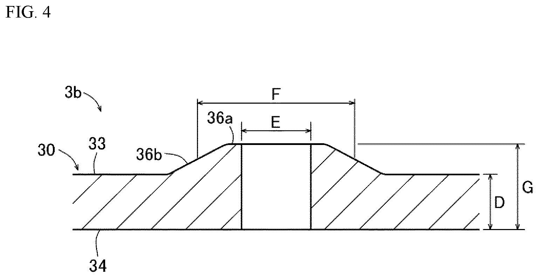

FIG. 2 is a side view of the hub ring 3 of FIG. 1 as viewed from the inner side, FIG. 3 is a cross-sectional view taken along line X-X of FIG. 2, and FIG. 4 is a cross-sectional view taken along line Y-Y of FIG. 2.

As illustrated in FIG. 2, the vehicle wheel mounting flange 3b includes a disk portion 30, four screw holes 31, two screw holes 32, a rib 35 provided on an inner-side circumferential edge of each screw hole 31, and a rib 36 provided on an inner-side circumferential edge of each screw hole 32.

The disk portion 30 is a disk having an inner-side surface 33 and an outer-side surface 34, and constitutes an outer shape of the vehicle wheel mounting flange 3b in the radial direction. Note that an outer shape of the disk portion 30 is not particularly limited as long as it has a shape larger than the ribs 35 and 36 in the radial direction.

The screw hole 31 is a tap hole penetrating in the axial direction. A nominal diameter of the screw hole 31 is, for example, M12 or M14. The screw holes 31 are equally arranged on a pitch circle having a predetermined diameter about the rotation axis R. The number of the screw holes 31 is not particularly limited as long as the number is at least two, and the screw holes may be arranged unevenly. As illustrated in FIG. 1, the wheel 81 and the brake rotor 82 are fixed by the wheel bolts 83 in a state where the brake rotor 82 is attached to an outer-side surface 34 of the disk portion 30 and the wheel 81 is attached to an outer side of the brake rotor 82.

The screw hole 32 is a tap hole penetrating in the axial direction. The screw holes 32 are equally arranged on a pitch circle having a predetermined diameter about the rotation axis R. In the present embodiment, a pitch diameter of the screw hole 32 is equal to or different from a pitch diameter of the screw hole 31. The number of the screw holes 32 is not particularly limited as long as the number is at least two, and the screw holes may be arranged unevenly. As illustrated in FIG. 1, the brake rotor 82 is fixed by the bolt 84 in a state where the brake rotor 82 is attached to the outer-side surface 34 of the vehicle wheel mounting flange 3b. Accordingly, the brake rotor 82 does not fall off even in a state where the wheel bolts 83 and the wheel 81 are not attached. The nominal diameter of the screw hole 32 is smaller than the nominal diameter of the screw hole 31 in the present embodiment, however the nominal diameter of the screw hole 32 may be equal to or larger than the nominal diameter of the screw hole 31.

As illustrated in FIG. 2, the rib 35 is a protruding portion provided on circumferential edges of the four screw holes 31 on the inner-side surface 33 of the disk portion 30. The rib 35 has a substantially flat upper surface 35a and an inclined surface 35b inclined from the upper surface 35a to the inner-side surface 33 of the disk portion 30. The rib 35 radially extends radially outward from the sliding contact surface 3e when viewed from the inner side, and is configured in a substantially arch shape.

The rib 36 is a protruding portion provided on circumferential edges of the two screw holes 32 on the inner-side surface 33 of the disk portion 30. The rib 36 has a substantially flat upper surface 36a and an inclined surface 36b inclined from the upper surface 36a to the inner-side surface 33 of the disk portion 30. The rib 36 radially extends radially outward from the sliding contact surface 3e when viewed from the inner side, and is configured in a substantially arch shape. The ribs 36 are also provided at two places where the screw holes 32 are not provided between the ribs 35 in order to maintain balance during rotation. In other words, the four ribs 36 are respectively provided between the four ribs 35.

The dimensional relationship of each part of the vehicle wheel mounting flange 3b will be defined hereinbelow. A dimensional relationship around the screw hole 31 and a dimensional relationship around the screw hole 36 will be described separately.

As illustrated in FIG. 3, the nominal diameter of the screw hole 31 is denoted by A. A width-direction dimension of the rib 35 is denoted by B in a cross-section (cross-section taken along line X-X in FIG. 2) passing through the center of the screw hole 31 and being a tangent to the pitch circle of the screw hole 31, and a thickness-direction dimension of the vehicle wheel mounting flange 3b passing through the rib 35 is denoted by C. The width-direction dimension B of the rib 35 is a dimension of a portion passing through a central portion of the rib 35 in the thickness direction.

At this time, lower limit values of B/A and C/A satisfy B/A ≥ 1.7 and C/A ≥ 0.8 from a viewpoint of ensuring rigidity (resistance to deformation) around the screw hole 31 of the rib 35. Accordingly, the area and thickness of the rib 35 can be sufficiently ensured, and deformation around the screw hole 31 due to fastening of the wheel bolt 83 can be suppressed. Therefore, the deflection of the vehicle wheel mounting flange 3b can be suppressed, thereby reducing the brake judder. When B/A < 1.7 or C/A < 0.8, the periphery of the screw hole 31 is easily deformed by fastening the wheel bolt 83.

Upper limit values of B/A and C/A are preferably B/A < 3.5 and C/A < 1.2 from the viewpoint of light-weighting. It is possible to sufficiently reduce the weight as compared with a case where the rib 35 is provided over the whole inner-side surface 33 of the disk portion 30. When B/A ≥ 3.5 or C/A ≥ 1.2, sufficient advantageous effects of light-weighting cannot be expected.

When a thickness-direction dimension of the vehicle wheel mounting flange 3b in which the rib 35 is not provided, that is, a thickness-direction dimension of the disk portion 30 is denoted by D, a lower limit value of D/C is preferably D/C ≥ 0.45 and more preferably D/C ≥ 0.5 from the viewpoint of ensuring rigidity around the screw hole 31 of the rib 35. Accordingly, the area and thickness of the rib 35 can be sufficiently ensured, and deformation around the screw hole 31 due to fastening of the wheel bolt 83 can be suppressed. Therefore, the deflection of the vehicle wheel mounting flange 3b can be suppressed, thereby reducing the brake judder.

An upper limit of D/C is preferably D/C < 0.75 and more preferably D/C < 0.7 from the viewpoint of light-weighting. It is possible to sufficiently reduce the weight as compared with a case where the rib 35 is provided over the whole inner-side surface 33 of the disk portion 30.

As illustrated in FIG. 4, the nominal diameter of the screw hole 32 is denoted by E. A width-direction dimension of the rib 36 is denoted by F in a cross-section (cross-section taken along line Y-Y in FIG. 2) passing through the center of the screw hole 32 and being a tangent to the pitch circle of the screw hole 32, and a thickness-direction dimension of the vehicle wheel mounting flange 3b passing through the rib 36 is denoted by G. The width-direction dimension F of the rib 36 is a dimension of a portion passing through a central portion of the rib 36 in the thickness direction.

At this time, lower limit values of F/E and G/E satisfy F/E ≥ 1.7 ≤ and G/E ≥ 0.8 from a viewpoint of ensuring rigidity around the screw hole 32 of the rib 36. Accordingly, the area and thickness of the rib 36 can be sufficient, and deformation around the screw hole 32 due to fastening of the bolt 84 can be suppressed. Therefore, the deflection of the vehicle wheel mounting flange 3b can be suppressed, thereby reducing the brake judder. When F/E < 1.7 or G/E < 0.8, the periphery of the screw hole 32 is easily deformed by fastening the bolt 84.

Upper limit values of F/E and G/E are preferably F/E < 3.5 and G/E < 1.2 from the viewpoint of light-weighting. It is possible to sufficiently reduce the weight as compared with a case where the rib 36 is provided over the whole inner-side surface 33 of the disk portion 30. When F/E ≥ 3.5 or G/E ≥ 1.2, sufficient advantageous effects of light-weighting cannot be expected.

In the vehicle wheel mounting flange 3b, the deflection of a region 34a (see FIG. 1) on a radially outer side of the pitch circle of the screw holes 31 and 32 in the outer-side surface 34 is preferably 50 µm or less. The deflection is a range in which the region 34a of the outer-side surface 34 is displaced in the axial direction when the hub ring 3 is rotated about the rotation axis R. Accordingly, the deflection of the brake rotor 82 fastened to the vehicle wheel mounting flange 3b can be suppressed, thereby reducing the brake judder.

Although the bearing device for a driven vehicle wheel 1 has been described in the present embodiment, the present invention can also be applied to a bearing device for a driving vehicle wheel.

As described above, the bearing device for a vehicle wheel 1 of the present embodiment has been described as a bearing device for a vehicle wheel having a third-generation structure of inner ring rotation in which the inner raceway surfaces 3d of the rolling elements 5 are directly formed on the outer periphery of the hub ring 3; however, the present invention is not limited thereto. For example, the bearing device for a vehicle wheel 1 may have a second-generation structure of inner ring rotation in which a pair of inner rings are press-fitted and fixed to the hub ring or a first-generation structure without a mounting flange on a vehicle body. Further, a second generation structure or a first generation structure of outer ring rotation may be adopted. In a case of a bearing device for a vehicle wheel of outer ring rotation, the vehicle wheel mounting flange is provided on the outer ring (outer member). Further, the embodiment above merely illustrates a representative embodiment of the present invention, and can be variously modified and implemented without departing from the gist of the present invention. Therefore, as long as a similar vehicle wheel mounting flange is provided, a so-called fourth-generation structure may be employed in which a bearing device for a vehicle wheel and a driving constant velocity universal joint are integrated.

### INDUSTRIAL APPLICABILITY

The present invention is applicable to a bearing device for a vehicle wheel.

### REFERENCE SIGNS LIST

- 1: Bearing device for vehicle wheel
- 2: Outer ring (outer member)
- 2a: Outer raceway surface
- 3: Hub ring (inner member)
- 3b: Vehicle wheel mounting flange
- 3d, 4a: Inner raceway surface
- 4: Inner ring (inner member)
- 5: Rolling element
- 31: Screw hole
- 32: Screw hole
- 34: Outer-side surface
- 35: Rib
- 36: Rib
- 83: Wheel bolt
- 84: Bolt

## Claims

1. A bearing device for a vehicle wheel, comprising:
an outer member having double-row outer raceway surfaces on an inner periphery;
an inner member having double-row inner raceway surfaces, the inner raceway surfaces facing the double-row outer raceway surfaces; and
double-row rolling elements rotatably accommodated between both raceway surfaces of the outer member and the inner member,
wherein
one of the outer member and the inner member has a vehicle wheel mounting flange,
the vehicle wheel mounting flange includes a plurality of screw holes into which wheel bolts are screwed for fixing a wheel and a brake rotor, and ribs respectively provided on inner-side circumferential edges of the screw holes, and
B/A ≥ 1.7 and C/A ≥ 0.8 are satisfied, when a nominal diameter of the screw hole is denoted by A, a width-direction dimension of the rib is denoted by B in a cross-section passing through a center of the screw hole and being a tangent to a pitch circle of the screw hole, and a thickness-direction dimension of the vehicle wheel mounting flange passing through the rib is denoted by C.

2. The bearing device for a vehicle wheel according to claim 1, wherein B/A < 3.5 and C/A< 1.2 are satisfied.

3. The bearing device for a vehicle wheel according to claim 1 or 2, wherein D/C ≥ 0.45 is satisfied when a thickness-direction dimension of the vehicle wheel mounting flange where the rib is not provided is denoted by D.

4. The bearing device for a vehicle wheel according to claim 3, wherein D/C < 0.75 is satisfied.

5. A bearing device for a vehicle wheel, comprising:
an outer member having double-row outer raceway surfaces on an inner periphery;
an inner member having double-row inner raceway surfaces, the inner raceway surfaces facing the double-row outer raceway surfaces; and
double-row rolling elements rotatably accommodated between both raceway surfaces of the outer member and the inner member,
wherein
one of the outer member and the inner member has a vehicle wheel mounting flange,
the vehicle wheel mounting flange includes a plurality of screw holes into which bolts are screwed for fixing a brake rotor only, and ribs respectively provided on inner-side circumferential edges of the screw holes, and
F/E ≥ 1.7 and G/E ≥ 0.8 are satisfied, when a nominal diameter of the screw hole is denoted by E, a width-direction dimension of the rib is denoted by F in a cross-section passing through a center of the screw hole and being a tangent to a pitch circle of the screw hole, and a thickness-direction dimension of the vehicle wheel mounting flange passing through the rib is denoted by G.

6. The bearing device for a vehicle wheel according to claim 5, wherein F/E < 3.5 and G/E < 1.2 are satisfied.

7. The bearing device for a vehicle wheel according to any one of claims 1 to 6, wherein a deflection of a region on an outer-side surface of the vehicle wheel mounting flange on a radially outer side of the pitch circle of the screw hole is 50 µm or less.
